**Europäisches Patentamt**

**European Patent Office**

**Office européen des brevets**

(11) Veröffentlichungsnummer : **0 344 616 B1**

## (12) EUROPÄISCHE PATENTSCHRIFT

(45) Veröffentlichungstag der Patentschrift :
**02.09.92 Patentblatt 92/36**

(21) Anmeldenummer : **89109452.6**

(22) Anmeldetag : **25.05.89**

(51) Int. Cl.⁵ : **B23B 29/034**

---

(54) **Bohrkopf.**

---

(30) Priorität : **02.06.88 DE 3818789
01.09.88 DE 3829609**

(43) Veröffentlichungstag der Anmeldung :
**06.12.89 Patentblatt 89/49**

(45) Bekanntmachung des Hinweises auf die
Patenterteilung :
**02.09.92 Patentblatt 92/36**

(84) Benannte Vertragsstaaten :
**AT CH DE FR GB IT LI SE**

(56) Entgegenhaltungen :
**CH-A- 636 031**

(56) Entgegenhaltungen :
**DE-A- 3 204 923
DE-A- 3 333 495
DE-A- 3 622 638
DE-B- 2 533 495**

(73) Patentinhaber : **KELCH GMBH + CO.
Werkzeugmaschinenfabrik Wiesenstrasse 64
W-7060 Schorndorf (DE)**

(72) Erfinder : **Die Erfinder haben auf ihre Nennung
verzichtet**

(74) Vertreter : **Patentanwälte RUFF, BEIER und
SCHÖNDORF
Neckarstrasse 50
W-7000 Stuttgart 1 (DE)**

EP 0 344 616 B1

## Beschreibung

Die Erfindung betrifft einen Bohrkopf nach dem Oberbegriff des Patentanspruches 1.

Nach der DE-PS 25 33 495 ist ferner eine Bohrstange bekannt, an deren Ende zwei Schneideinsätze entgegengesetzt gerichtet bzw. um 180° zueinander versetzt radial verstellbar angeordnet sind, wobei zur Radialverstellung für jeden Schneideinsatz ein einziges Stellglied in Form einer Gewinde-Stellspindel vorgesehen ist, die in einer gemeinsamen Spannpratze für beide Schneideinsätze in einer Gewindebohrung gelagert und mit ihrem einen, seitlich aus der Spannpratze herausragenden Ende an einer Gegenfläche abgestützt ist, die durch eine Schulterfläche des zugehörigen Schneideinsatzes gebildet ist.

Die Spannglieder gegenüber dem Tragkörper und die Spannpratze gegenüber den Spanngliedern und somit andererseits gegenüber dem Tragkörper haben quer zur Spannrichtung bzw. zur Bohrachse übliches Bewegungsspiel. Die Spannpratze nimmt keine genau definierte Lage gegenüber der Bohrachse ein, sondern verändert zum Beispiel beim Festspannen der Klemmplatte bzw. beim Anziehen der Spannglieder seine Lage.

Die DE-A-3 333 495 zeigt einen Bohrkopf, bei dem das jeweilige Stellglied an einem zugehörigen Schneideinsatz mit Gewinde gelagert und gegenüber dem Tragkörper an einer Hülse abgestützt ist, welche mit einem kurzen Teil ihrer Länge sowie im Abstand vom Stellglied in eine Bohrung des Tragkörpers eingreift und von einer Spannschraube durchsetzt ist. Es sind keinerlei Maßnahmen getroffen, die Hülse so anzuordnen, daß die durch sie gebildete Gegenfläche für die Anlage des Stellgliedes gegenüber der Bohrachse eine genau definierte Lage einnimmt, wodurch eine genaue Einstellung des Arbeitsdurchmessers des Werkzeuges wesentlich beeinträchtigt wird.

Der Erfindung liegt die Aufgabe zugrunde, einen Bohrkopf der gennanten Art zu schaffen, bei dem Nachteile von bekannten Ausbildungen vermieden sind und welcher insbesondere bei einfachem Aufbau und leichter Handhabung eine sehr genaue Einstellung der jeweiligen Schneide gewährleistet.

Diese Aufgabe wird bei einem Bohrkopf der gennanten Art gemäß der Erfindung durch die Merkmale des Patentanspruches 1 gelöst.

Da die Spannpratze beispielsweise durch Führung auf wenigstens einen Paßschaft in Stellrichtung des Schneideinsatzes spielfrei gegenüber dem Tragkörper angeordnet ist, nimmt sie gegenüber der Bohrachse eine genau bestimmte Lage ein, was einerseits der Aufrechterhaltung der Maßgenauigkeit der Einstellung der Schneiden während des Festspannens des Schneideinsatzes dient als auch dafür geeignet ist, daß die Klemmpratze eine auf die Bohrachse genau bezogene Meßbezugsfläche bieten kann, von welcher aus mit einem Meßwerkzeug der eingestellte Arbeitsdurchmesser des Schneideinsatzes bestimmt werden kann.

Die Meßbezugsfläche ist zur Anlage einer Schieblehre, einer Maßlehre, eines Mikrometers o. dgl. geeignet und liegt so, daß bei mit einer Meßfläche an ihr angesetzten Meßwerkzeug dessen andere Meßfläche quer zur Stellrichtung an der Schneide angelegt werden kann. Liegt diese Meßbezugsfläche quer zur Schneidenbrustfläche des Schneideneinsatzes bzw. rechtwinklig zur Stellrichtung in einer Axialebene der Bohrachse, so ergibt das Längenmaß zwischen ihr und der Schneide des Schneideinsatzes unmittelbar den eingestellten Arbeitsradius. Somit muß rechnerisch noch eine Konstante abgezogen oder addiert werden.

Die Meßbezugsfläche ist besonders gut zugänglich, da sie an der Spannpratze vorgesehen ist. Vorteilhaft ist für jede Schneide bzw. für jeden Schneideinsatz eine gesonderte Meßbezugsfläche so vorgesehen, daß sie von der zugehörigen Schneide wegweist und daher ein Meßwerkzeug mit einander gegenüberliegen Meßflächen verwendet werden kann. Weist die Meßbezugsfläche in Richtung zur zugehörigen Schneide, so muß zum Messen ein geeignetes Werkzeug, beispielsweise das Tiefenmaß einer Schieblehre, verwendet werden.

Durch die Abstützung des Stellgliedes, z. B. an dem Paßschaft des Spanngliedes, nach den Merkmalen des Anspruchs 2, ist es auch in Bezug auf die Bohrachse gegenüber dem Tragkörper genau lagebestimmt abgestützt, so daß eine direkte Verstellung des Schneideinsatzes gegenüber dem Tragkörper möglich ist. Die Gegenfläche kann zum Beispiel an einem zentriert in den Tragkörper eingesetzten Gegenstück vorgesehen sein, das über die Führung vorsteht.

Derartige Bohrköpfe können auch als Drehwerkzeug beispielsweise für einen Außenumfang geeignet sein und werden insbesondere am Ende einer Bohrstange angeordnet, mit welcher sie einen einteiligen oder einen in unterschiedlicher Länge zusammensetzbaren gesonderten Bauteil bilden.

Statt oder zusätzlich hierzu kann das Stellglied und das Spannglied bzw. deren wirksame Flächen in Stellrichtung geradlinig hintereinander liegen, was z. B. dadurch erreicht werden kann, daß das Stellglied und das Spannglied in einer gemeinsamen Ebene liegen, die parallel zur Stellrichtung und/oder zur Bohrachse vorgesehen ist.

Ferner kann das Stellglied annähernd über seine ganze Axialerstreckung und/oder über den größten Teil seines Umfanges in jeder Einstell-Lage wenigstens an seiner in Drehrichtung des Bohrkopfes vorderen und/oder hinteren Seite verdeckt bzw. ummantelt liegen, so daß es von den Einwirkungen der Bohrspäne, der beispielsweise durch den Bohrkopf zu den Schneiden zugeführten Kühlflüssigkeit und anderen mechanischen

2

Einwirkungen geschützt ist.

Die Einstellbarkeit des Schneideinsatzes kann auch dadurch wesentlich vereinfacht werden, daß das Stellglied von einer Außenseite, insbesondere vom äußeren Ende des Schneideinsatzes her zugänglich ist, so daß seine der Betätigung dienende Zugänglichkeit an derselben Seite wie die Schneide des Schneideinsatzes liegt und somit auch während eines an der Schneide angesetzten Meßwerkzeuges eine einfache Verstellung möglich ist. Das Stellglied bzw. wenigstens dessen Eingriffsglied für ein Betätigungs-Werkzeug liegt bevorzugt im wesentlichen axial außerhalb des Tragkörpers.

Das Stellglied kann in einfacher Weise einen baulich mit dem Schneideinsatz verbundenen und somit mit diesem montierbaren Bauteil bilden, so daß das Stellglied schon vor der Montage in einfacher Weise wenigstens grob voreingestellt werden kann und bei einem Schneideinsatz-Wechsel der jeweilige Schneideinsatz sein zugehöriges und ggf. voreingestelltes Stellglied trägt.

Zur Vereinfachung der Herstellung und Montage des Bohrkopfes ist die zweckmäßig über die Führung in Richtung der Bohrachse zum freien Ende des Bohrkopfes vorstehende Bezugsfläche an dem Spannglied vorgesehen, so daß als Gegenstück ein gesonderter Bauteil nicht erforderlich ist. Die Passungs-Umfangsfläche des Spanngliedes weist einen feintolerierten und beispielsweise geschliffenen zylindrischen Schaft auf, mit dem es in eine die Führung durchsetzende, zur Bohrachse exzentrische, jedoch parallele Paßbohrung des Tragkörpers spielfrei eingesetzt ist und der auch mit seiner Passungs-Umfangsfläche unmittelbar die Bezugsfläche für die linien- bzw. punktartige Abstützung des Stellgliedes bilden kann.

Das Spannglied und/oder das Stellglied kann durch jedes geeignete Maschinenbauelement, beispielsweise einen Exzenter, einen Keilschieber oder ähnliches gebildet sein. Besonders vorteilhaft ist es jedoch, wenn das Spannglied durch eine einfache Spannschraube gebildet ist, von der dann ein Schaftabschnitt unmittelbar den in den Tragkörper eingreifenden bzw. die Bezugsfläche bildenden Paßschaft bilden kann. Auch das Stellglied ist zweckmäßig in einfacher Weise durch eine Schraube, nämlich beispielsweise eine als Stellgewindespindel dienende Stiftschraube gebildet, deren Betätigungsende vollständig versenkt in einer als Gewindebohrung ausgebildeten Durchgangsbohrung des Schneideinsatzes liegen kann. Liegt das Stellglied in Axialansicht auf den Bohrkopf etwa in der Mitte der Breite der Führung für den zugehörigen Schneideinsatz bzw. etwa in der Mitte von dessen Breite, so können beim Verstellen störende Drehmomentkräfte besonders einfach vermieden werden.

Obwohl für jeden Schneideinsatz eine gesonderte Spannpratze möglich ist, ergibt sich eine weiter vereinfachte Ausbildung, wenn die Spannpratze für alle bzw. beide Schneideinsätze gemeinsam vorgesehen ist und deren Trennebene überquert.

Die Führung für den Schneideinsatz könnte z. B. durch eine einfache Nutführung, eine Schwalbenschwanzführung, eine Wangenführung o. dgl. gebildet sein, jedoch ergibt sich eine besonders gute Lagerung und drehfeste Verbindung des Schneideinsatzes mit dem Tragkörper bei kompakten Abmessungen, wenn der Schneideinsatz statt dessen oder zusätzlich mit mindestens einer Seitenfläche gleitbar abgestützt ist, wobei vorzugsweise zwei Schneideinsätze unmittelbar aneinander abgestützt und ggf. geführt sind.

Die Stirnfläche bzw. die Führungsfläche ist in Axialansicht aufden Bohrkopf zweckmäßig rechtwinklig Z-förmig und im wesentlichen symmetrisch zu zwei zueinander rechtwinkligen Axialebenen der Bohrachse bzw. der Mittelachse des Tragkörpers angeordnet, wobei die inneren Flanken der Z-Schenkel annähernd in einer gemeinsamen Axialebene liegen können, so daß aufgrund des ansonsten im wesentlichen zylindrischen Außenumfanges des Tragkörpers in Axialansicht vier annähernd gleichmäßig über den Umfang verteilte periphere Felder von der Führung frei bleiben und jeweils zwei spiegelsymmetrische Felder einander diametral gegenüberliegen. Diese Felder können durch winkelnutförmige und/oder flache Aussparungen am Umfang des Tragkörpers begrenzt sein, wobei die winkelnutförmigen Aussparungen zweckmäßig benachbart zu den Schneidenbrustflächen liegen und Span-Nuten sowie ggf. Aufnahmen für Kühlmittel-Spritzdüsen bilden, während die beiden um etwa 90° zu versetzenden Abflachungen an den voneinander abgekehrten Rückenflächen der Schneideinsätze liegen und zum Beispiel Null-Markierungen für Einstellskalen an den Schneideinsätzen aufweisen können.

Die Führung für mindestens einen Schneideinsatz oder für alle Schneideinsätze könnte in einer einzigen Ebene, beispielsweise rechtwinklig zur Bohrachse liegen. Es hat sich jedoch für die Aufnahme der beim Arbeiten auftretenden Kräfte als vorteilhaft erwiesen, wenn die Führung für den jeweiligen Schneideinsatz wenigstens teilweise in einer Ebene liegt, die von der zur Bohrachse rechtwinkligen Lage abweicht. Sind zwei Führungen für zwei Schneideinsätze vorgesehen, so können diese eine zur Mitte zwischen den Schneideinsätzen vorspringende bzw. winkelförmige Führung bilden, wobei die beiden Einzel-Führungen zweckmäßig stumpfwinklig unter einem Winkel zueinander liegen, der nur geringfügig, beispielsweise zwischen 10 und 30°, vorzugsweise um etwa 20°, kleiner als 180° ist. Es können auch Führungen für drei oder mehr im wesentlichen gleichmäßig um die Bohrachse verteilte Schneideinsätze vorgesehen sein.

Eine besonders vorteilhafte Führung des jeweiligen Schneideinsatzes läßt sich erreichen, wenn mindestens ein Führungssteg in eine Führungsnut eingreift, wobei bevorzugt je Schneideinsatz nur,ein einziger Führungssteg vorgesehen und benachbart zu diesem weitere Führungsflächen angeordnet sind, die jedoch verhältnismäßig glattflächig und eben ausgebildet sein können, so daß sie sich leicht reinigen lassen und die Gefahr von Verschmutzungen, die zu Ungenauigkeiten führen können, weitestgehend vermieden ist.

Der Führungssteg könnte zwar am Tragkörper vorgesehen sein, jedoch wird er bevorzugt einteilig mit dem Schneideinsatz bzw. dessen Schaft ausgebildet, so daß sich eine Art Nut- und Federführung ergibt und der Schneideinsatz eine im Querschnitt winkelförmige Gleitfläche haben kann, wobei die durch die Stegflanke gebildete Gleitfläche zweckmäßig ebenfalls durchgehend eben und glatt bzw. geschliffen ausgebildet ist. Eine kompakte sowie einfach herzustellende Ausbildung ergibt sich dabei, wenn der Führungssteg an der näher bei der Bohrachse liegenden Seitenfläche des Schneideinsatzes liegt bzw. seine zugehörige Flanke praktisch eine ggf. geneigte Fortsetzung dieser Seitenfläche bildet.

Ein besonders vorteilhaftes Merkmal des Erfindungsgegenstandes besteht darin, daß zur Führung zweier Schneideinsätze nur eine einzige Führungsnut vorgesehen ist, in welche beide Führungsstege mit ihren einander zugekehrten Seiten gegeneinander abgestützt eingreifen können, wobei jeder Schneideinsatz nur mit einer, nämlich der vom anderen Führungssteg abgekehrten Flanke seines Führungssteges an einer einzigen Seitenflanke der Führungsnut gegen radial nach außen gerichtete Kräfte sicher abgestützt ist, während die im Winkel daran anschließende, radial weiter außen liegende Gleitfläche gegen Axialkräfte abstützt.

Die Schneideinsätze liegen zweckmäßig großflächig mit ihren einander zugekehrten Seitenflächen aneinander an. Durch entsprechend positiv oder negativ geneigte Ausbildungen der ineinandergreifenden Flanken von Führungssteg und Führungsnut können quer zur Nutlängsrichtung und zur Bohrachse gerichtete Kraftvektoren der Spannkraft hervorgerufen werden, durch die der Halt des Schneideinsatzes noch weiter verbessert wird. Es ist aber auch denkbar, den Führungssteg bzw. die Führungsnut mit Abstand zwischen beiden voneinander abgekehrten Seitenflächen des Schneideinsatzes bzw. von dessen Schaft vorzusehen. Der Führungssteg und/oder die jeweilige Seitenfläche erstreckt sich zweckmäßig über die gesamte Länge des Schneideinsatzes und kann im Querschnitt trapezförmig sein. Über den jeweils gegenüberliegenden Schneideinsatz kann der Führungssteg jedes Schneideinsatzes auch an der anderen Nutflanke mittelbar abgestützt sein. Gegenüber der Bodenfläche der Führungsnut dagegen ist der Führungssteg zweckmäßig berührungsfrei.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:

Fig. 1 einen erfindungsgemäßen Bohrkopf in Ansicht;

Fig. 2 den Bohrkopf gemäß Fig. 1 in Axialansicht auf das Arbeitsende;

Fig. 3 den Bohrkopf gemäß Fig. 1, jedoch in einem anderen Einstellzustand;

Fig. 4 den Bohrkopf gemäß Fig. 3 in einer Darstellung entsprechend Fig. 2, jedoch in einer geringfügig abgewandelten Ausbildung;

Fig. 5 einen Axialschnitt durch den Tragkörper des Bohrkopfes gemäß Fig. 1;

Fig. 6 den Tragkörper gemäß Fig. 5 in Ansicht auf die Rückseite;

Fig. 7 eine weitere Axialansicht des Bohrkopfes bei entferntem Schneideinsatz;

Fig. 8 eine weitere Ausführungsform in einer Darstellung entsprechend Fig. 1;

Fig. 9 eine teilweise geschnittene Draufsicht auf den Bohrkopf gemäß Fig. 8;

Fig. 10 den Bohrkopf gemäß Fig. 8 in Ansicht von rechts;

Fig. 11 einen Schneideinsatz in einer Ansicht gemäß Fig. 10 in geringfügig vergrößerter Darstellung;

Fig. 12 den Tragkörper des Bohrkopfes gemäß den Figuren 8 bis 10 im Axialschnitt;

Fig. 13 den Tragkörper gemäß Fig. 12 in Ansicht von rechts;

Fig. 14 den Tragkörper gemäß Fig. 12 in Draufsicht;

Fig. 15 den Tragkörper gemäß Fig. 12 in Ansicht von unten;

Fig. 16 ein weiteres Nutprofil in vergrößerter Darstellung und

Fig. 17 ein weiteres Nutprofil in einer Darstellung entsprechend Fig. 16.

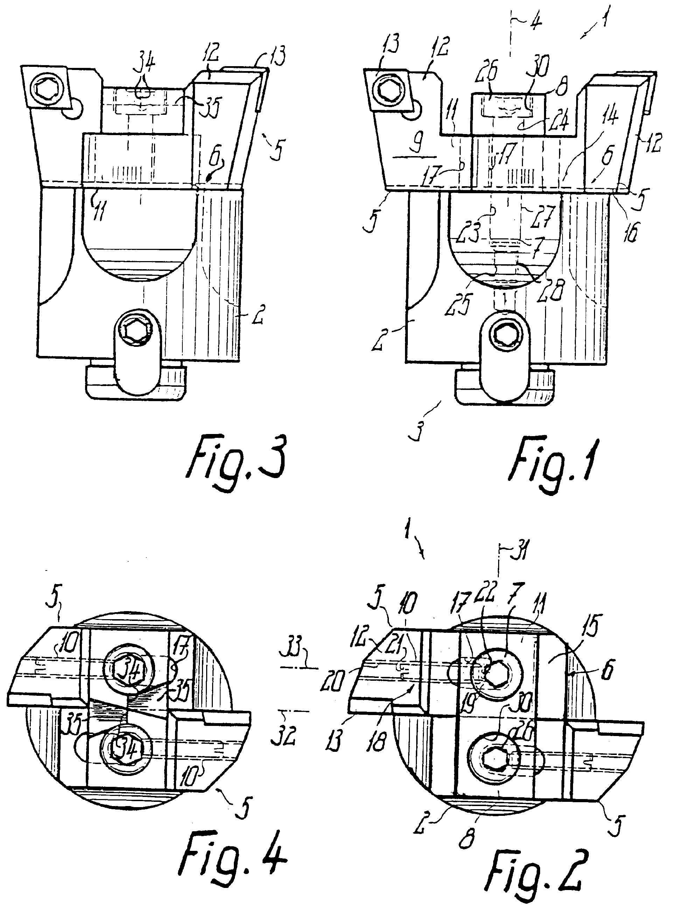

Der Bohrkopf 1 gemäß den Fig. 1 bis 7 weist einen achs- bzw. im wesentlichen rotationssymmetrischen und aus einem zylindrischen Rohling herausgearbeiteten Tragkörper 2 auf, der mit seinem hinteren Ende im wesentlichen formschlüssig starr am vorderen Ende einer Bohrstange etwa gleichen Außendurchmessers befestigt werden kann und dessen axiale Länge etwa in der Größenordnung seines Durchmessers liegen kann. Das Anschlußende 3 des Tragkörpers 2 ist gleichzeitig als Kühlmittelanschluß derart ausgebildet, daß das Kühlmittel durch die Bohrstange und den Tragkörper 2 in den Arbeitsbereich des Bohrkopfes 1 geleitet werden kann.

Der Tragkörper 2 trägt ggf. einen einzigen oder mehrere, bevorzugt zwei um 180° zueinander versetzte und gleich ausgebildete, leicht lösbare und abnehmbare Schneideinsätze 5, die im wesentlichen vollständig an dem vom Anschlußende 3 abgekehrten Ende des Tragkörpers 2 liegen, in jeder Stellung radial über den Außenumfang des Tragkörpers 2 vorstehen und über Führungen 6 in dieser radialen Richtung hin und her verstellbar an dem Tragkörper 2 gelagert sind. Zur Festsetzung des jeweiligen Schneideinsatzes 5 sind zwei Spannglieder 7 vorgesehen, die in einer gemeinsamen, zur Stellrichtung Pfeil 9 des Schneideinsatzes 5 rechtwinkligen Axialebene 31 der Bohrachse 4 des Bohrkopfes 1 liegen, aber auch beiderseits gleich weit entfernt bzw. benachbart zu dieser Axialebene vorgesehen sein können. In der rechtwinklig dazu liegenden Axialebene 32 der Bohrachse 4 liegen die beiden Schneideinsätze 5 wenigstens annähernd mit ebenen Flächen aneinander an bzw. unmittelbar benachbart zueinander, so daß sie sich auch gegenseitig abstützen können.

Im dargestellten Ausführungsbeispiel sind die beiden Spannglieder 7 jeweils für jeden der beiden Schneideinsätze 5 gemeinsam vorgesehen. Zu diesem Zweck ist eine von den Spanngliedern 7 durchsetzte Spannpratze 8 vorgesehen, die zwar - in Stellrichtung Pfeil 9 gesehen - im Winkel zueinander liegende bzw. gegen den Tragkörper 2 gerichtete Schenkel, wie Spannschenkel aufweisen kann, zweckmäßig aber durch ein einfaches, länglich-rechteckiges bzw. kubisches Plättchen gebildet ist.

Zum Verstellen jedes Schneideinsatzes 5 ist ein einziges, gesondertes Stellglied 10 in Form eines Gewindestiftes vorgesehen, das im wesentlichen einen baulichen Bestandteil mit dem zugehörigen Schneideinsatz 5 bildet. Dieses Stellglied 10 bzw. die ihm zugehörige Stellachse liegt in einer gemeinsamen Ebene 33 mit der Spannachse des Spanngliedes 7, wobei diese Ebene 33 parallel zur Axialebene 32 und seitlich der art gegenüber dieser versetzt ist, daß sie gemäß Fig. 2 etwa in der Mitte der zugehörigen, in Richtung der Axialebene 31 zu messenden breite des Schneideinsatzes 5 liegt.

Des weiteren liegt das Stellglied 10 so nahe wie möglich beim Tragkörper 2 bzw. bei der Führung 6, nämlich so nahe, daß zwischen dem Außenumfang des Stellgliedes 10 und der der Führung 6 zugehörigen Außenfläche des Schneideinsatzes 5 gerade noch die notwendige Materialdicke von höchstens wenigen Millimetern, insbesondere weniger als einem Millimeter gegeben ist. Dadurch übt das Stellglied 10 in keiner der möglichen Richtungen ein Kippmoment auf den Schneideinsatz 5 aus.

Jeder Schneideinsatz 5 ist in Ansicht im wesentlichen winkelförmig, derart, daß ein längerer Schenkel einen radial zur Bohrachse 4 liegenden Schaft 11 für die Befestigung am Tragkörper 2 und der andere, etwa rechtwinklig dazu liegende Schenkel einen etwa parallel zur Bohrachse 4 vom Tragkörper 2 abstehenden Schneidkopf 12 bildet, an dessen etwa in der Axialebene 32 liegender Vorderfläche versenkt ein Schneidkörper 13 in Form beispielsweise eines Wende-Schneidplättchens lös- und auswechselbar befestigt ist.

Der gegenüber seiner Breite in Richtung der Bohrachse 4 flachere Schaft 11 weist an seiner dem Tragkörper 2 zugekehrten Schenkelaußenseite eine über seine gesamte Länge und damit auch über die vom Schneidkörper 13 abgewandte Außenseite des Schneidkopfes 12 durchgehende Gegenfläche 16 auf, die über die gesamte Breite des Schaftes 11 bzw. bis an die Axialebene 32 reicht. Mit dieser Gegenfläche 16 steht der jeweilige Schneideinsatz 5 in Eingriff mit einer komplementären Fläche 15 des Tragkörpers 2, die an dessen vom Anschlußende 3 abgekehrten Stirnseite 14 vorgesehen und in Axialansicht gemäß Fig. 7 annähernd rechtwinklig Z-förmig derart ist, daß jede, einen Z-Endschenkel einschließende Hälfte dieser Z-Form eine Einzel-Führung 6 für einen der beiden Schneideinsätze 5 bildet.

In Axialansicht gemäß Fig. 2 reichen in der Axialebene 31 die voneinander abgekehrten Außenseiten der beiden Schneideinsätze 5 ebenso wie die zugehörigen Begrenzungen der Führung 6 nicht bis an die zylindrische Hüllfläche des Tragkörpers 2, sondern sie stehen demgegenüber geringfügig zurück, so daß der Tragkörper 2 in Axialansicht gemäß Fig. 2 benachbart zu diesen Außenseiten führungsfreie Kreisabschnitte bildet, an denen der Grundkörper 2 mit von der Stirnfläche 14 über einen Teil seiner Länge reichenden Umfangs-Abflachungen versehen ist.

Die Z-Schenkel der Fläche 15 liegen in Axialansicht gemäß Fig. 2 parallel zur Axialebene 32 und symmetrisch zur jeweils zugehörigen Ebene 33, wobei zwischen der inneren Seitenflanke jedes Z-Schenkels und dem hinteren Ende des anderen Z-Schenkels ein in Axialansicht einspringend winkelförmiger, führungsfreier Ausschnitt gebildet ist, dessen eine Winkelflanke etwa in der Axialebene 32 und dessen andere Winkelflanke etwa rechtwinklig dazu liegt sowie bis zur zylindrischen Hüllfläche des Tragkörpers 2 reicht. Diese Ausschnitte sind durch zwei einander diametral gegenüberliegende nutartige Aussparungen am Außenumfang des Tragkörpers 2 gebildet, die von der Stirnfläche 14 über einen Teil von dessen Länge reichen und jeweils benachbart zur Schneidenbrustfläche des zugehörigen Schneideinsatzes 5 liegen, so daß in diesen Aussparungen richtungseinstellbare Düsen für Kühlflüssigkeit so liegen können, daß sie gegenüber der genannten Hüllfläche vollständig nach innen versetzt sind.

Jeder, in Axialansicht bezüglich der zugehörigen Ebene 33 im wesentlichen symmetrische Schaft 11 weist ein ihn durchsetzendes und über einen Teil seiner Länge reichendes Langloch 17 auf, das parallel sowie symmetrisch zur zugehörigen Ebene 33 liegt, die Gegenfläche 16 durchsetzt und in jeder Stellung des Schneideinsatzes 5 im wesentlichen von der Spannpratze 8 vollständig überdeckt sein kann. Das Langloch 17 ist von dem jeweils zugehörigen Spannglied 7 durchsetzt.

Ferner weist jeder Schneideinsatz 5 eine im wesentlichen in seinem Schaft 11 liegende Lagerung 18 für das zugehörige Stellglied 10 auf, dessen annähernd bis an die Axialebene 31 reichenden sowie dieser zugekehrten Ende am Tragkörper 2 eine gegenüber der Bohrachse 4 genau lagebestimmt liegende Bezugsfläche 19 als Gegen- bzw. Abstützfläche zugeordnet ist. Die Lagerung 18 ist durch eine Durchgangs-Gewindebohrung 20 gebildet, welche die vom Schaft 11 abgekehrte Außenseite des Schneidkopfes 12 sowie das näher bei dieser Außenseite liegende Ende des Langloches 17 unmittelbar benachbart zur Gegenfläche 16 durchsetzt und die ebenso wie das Spannglied 10 rechtwinklig zur Bohrachse 4 bzw. zur Axialebene 31 liegt. Das mit einem Werkzeugeingriff versehene Betätigungsende 21 des Stellgliedes 10 kann dadurch von der genannten Außenseite des Schneidkopfes 12 her erreicht werden, obwohl es vollständig innerhalb des Schneideinsatzes 5 verdeckt liegt.

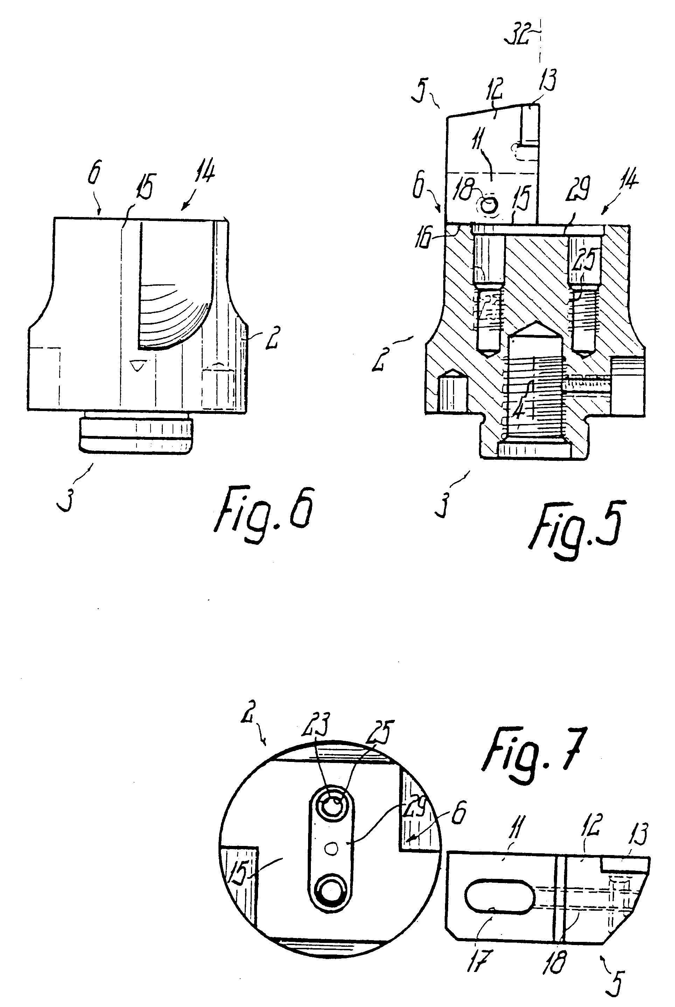

Das andere Ende des Stellgliedes 10, dessen Durchmesser kleiner als die Breite des Langloches 17 ist, ragt frei über einen Teil der Länge in das Langloch 17 und bildet mit seiner ebenen Endfläche eine Druckfläche 22, mit welcher das Stellglied 10 linienförmig an der Bezugsfläche 19 so abgestützt ist, daß es bei Betätigung in einer Richtung den zugehörigen Schneideinsatz 5 radial nach außen drückt, während es bei Betätigung in der entgegengesetzten Richtung von der Bezugsfläche 19 abhebt. Gemäß Fig. 3 können die Schneideinsätze 5 so weit nach innen geschoben werden, daß die Schneidköpfe 12 beiderseits an der Spannpratze 8 anliegen.

Der Tragkörper 2 und die Spannpratze 8 weisen für jedes Spannglied 7 miteinander fluchtende, gleiche Paßbohrungen 23, 24 auf. Die Paßbohrung 23 des Tragkörpers 2 durchsetzt die Stirnfläche 14 bzw. die Führung 6 und geht am inneren Ende in eine Sackloch-Gewindebohrung 25 etwa gleichen Gewinde-Außendurchmessers über. Die Paßbohrung 24 der Spannpratze 8 geht an der von den Schäften 11 abgekehrten Seite in eine Senkbohrung 30 über, in welcher der Schraubenkopf 26 des Spanngliedes 7 derart im wesentlichen vollständig versenkt aufgenommen ist, daß seine äußere Stirnfläche etwa fluchtend mit der zugehörigen Außenfläche der Spannpratze 8 liegt und außerdem die Spannglieder 7 gegenüber den Schneidköpfen 12 und den Schneidkörpern 13 in Richtung zum Tragkörper 2 zurückversetzt sind.

Jedes Spannglied 7 weist im Anschluß an seinen Schraubenkopf 26 einen Paßschaft 27 auf, der einerseits im wesentlichen spielfrei in die Paßbohrung 24 der Spannpratze 8 und andererseits im wesentlichen spielfrei in die Paßbohrung 23 des Tragkörpers 2 eingreift und des weiteren das gegenüber seinem Außendurchmesser um wenige Zehntel Millimeter breitere Langloch 17 des zugehörigen Schneideinsatzes 5 mit geringem Spiel in Richtung der Axialebene 31 durchsetzt. An dem vom Schraubenkopf 26 abgekehrten Ende geht der Paßschaft 27 in ein Gewindeende 28 für den Eingriff in die Gewindebohrung 25 über.

Im Bereich des Durchtrittes der jeweiligen Paßbohrung 23 durch die Führungs- und Stirnfläche 14 des Tragkörpers 2 weist dieser eine die Paßbohrung 23 umgebende Senkvertiefung 29 mit rechtwinklig zur Bohrachse 4 liegender Bodenfläche auf, wobei für beide Paßbohrungen 23 eine gemeinsame, längliche und zur Axialebene 31 etwa parallele Senkvertiefung 29 vorgesehen sein kann. Dadurch liegt der Paßschaft 27 zwischen dem Tragkörper 2 und dem Schaft 11 des zugehörigen Schneidansatzes 5 auf kurzer Länge frei und außerdem können die Paßbohrungen 23 unabhängig von der Führung 6 sehr genau hergestellt werden.

An dem auch innerhalb des jeweiligen Langloches 17 freiliegenden Abschnitt des Paßschaftes 27, der mit seiner Umfangsfläche die Bezugsfläche 19 bildet, stützt sich außerdem das jeweils zugehörige Stellglied 10 mit seiner Druckfläche 22 ab. Der Paßschaft 27 hat insofern mehrere Funktionen, nämlich seine genau zentrierte Ausrichtung und Drehlagerung gegenüber dem Tragkörper 2, seine Funktion als gegenüber der Bohrachse 4 in jeder Drehlage gleich sowie genau lagebestimmte Bezugsfläche 19 und schließlich die gegenüber dem Tragkörper 2 und damit gegenüber der Bohrachse 4 genau zentrierte Ausrichtung der Spannpratze 8.

Am Tragkörper 2 ist ferner eine unabhängig von der Verstellbewegung des jeweiligen Schneideinsatzes 5 lagebestimmt angeordnete Meßbezugsfläche 34 für jeden Schneideinsatz 5 vorgesehen, wobei diese Meßbezugsfläche 34 infolge der beschriebenen Zentrierung der Spannpratze 8 an dieser bzw. an deren vom Tragkörper 2 abgekehrten Seite leicht zugänglich vorgesehen sein kann. Die Meßbezugsfläche bzw. Meßbezugsflächen 34, die in der Axialebene 31 liegen können, sind zweckmäßig unmittelbar benachbart zur bzw. in der Axialebene 32 vorgesehen, derart, daß sich die, jedem Schneideinsatz 5 zugehörige Meßbezugsfläche 34 von der Teilungsebene zwischen den Schneideinsätzen 5 nach einer Seite erstreckt und die Meßbezugsflächen ausschließlich zwischen den beiden Spanngliedern 7 liegen.

Im dargestellten Ausführungsbeispiel sind die beiden, entgegengesetzt weisenden, jedoch in einer gemeinsamen Ebene liegenden Meßbezugsflächen 34 jeweils durch eine taschenförmige Vertiefung 35 in der vom Tragkörper 2 abgekehrten, gegenüber den Enden der Schneidköpfen 12 zurückversetzten Seite der Spannpratze 8 gebildet, wobei jede Vertiefung 35 von der zugehörigen Meßbezugsfläche 34 bis zu der in derselben Richtung weisenden Seitenfläche der Spannpratze 8 reichen und in dieser Richtung zum leichten Einführen des Meßwerkzeuges verbreitert sein kann.

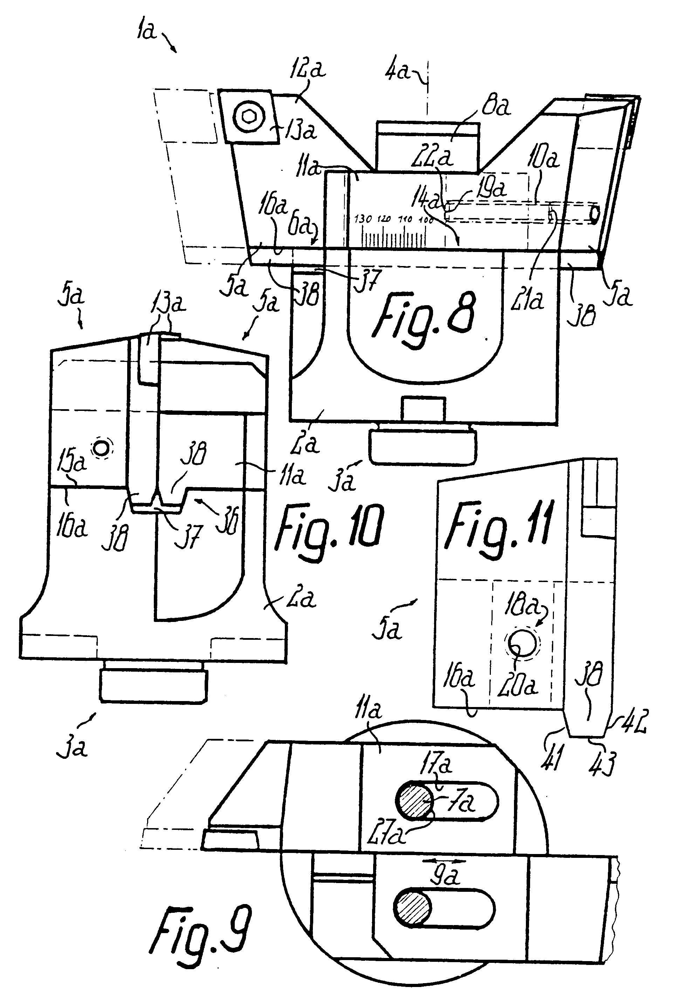

Wie insbesondere die Fig. 5 und 6 zeigen, liegen die Einzel-Führungen 6 in einer gemeinsamen, zur Bohrachse 4 rechtwinkligen Ebene, obwohl auch andere Lagen möglich sind.

Jeder Schneideinsatz 5 kann beispielsweise an der Rückseite seines Schaftes 11 eine Längen- beispielsweise eine Millimeterskala aufweisen, welcher an der zugehörigen Abflachung des Tragkörpers 2 eine Bezugsmarkierung zugeordnet ist, so daß jeder Schneideinsatz 5 auch unmittelbar nach Skala eingestellt werden kann. Weiterhin kann jeder Schneidkörper 13 unter Verwendung eines beispielsweise kassettenartigen Zwischenträgers am Grundkörper des zugehörigen Schneideinsatzes 5 befestigt sein, wobei dann dieser, beispielsweise einen Teil des Schneidkopfes 12 bildende Zwischenträger lös- bzw. auswechselbar an dem den Schaft 11 aufweisenden Grundkörper des Schneideinsatzes 5 befestigt ist, während der Schneidkörper 13 seinerseits lös- bzw. auswechselbar am Zwischenträger angeordnet ist. Bei eventuellen Beschädigungen des Zwischenträgers durch Verschleiß im Bereich des Schneidkörpers 13 braucht dadurch nicht der gesamte Grundkörper des Schneideinsatzes 5 erneuert zu werden.

In den Figuren 8 bis 15 sind für einander entsprechende Teile die gleichen Bezugszeichen wie in den Figuren 1 bis 7, jedoch mit dem Index "a" verwendet, weshalb die Beschreibung sinngemäß gilt.

Bei der Ausführungsform gemäß den Figuren 8 bis 15 ist jeder Schneideinsatz 5a gegen Radialkräfte durch eine Nut- und Federführung 36 abgestützt, während für die Abstützung gegenüber den Axialkräften ebene und glatte Gleitflächen 15a, 16a an der zugehörigen Stirnfläche des Tragkörpers 2a und der an dieser anliegenden Seite des Schneideinsatzes 5a vorgesehen sind. Unmittelbar im Anschluß an diese, von der äußeren Seitenfläche des zugehörigen Schneideinsatzes 5a bzw. des Schaftes 11a ausgehenden Gleitfläche 16a weist der Schneideinsatz 5a einen über diese Gleitfläche 16a geringfügig vorstehenden Vorsprung in Form eines annähernd über seine gesamte Länge reichenden Führungssteges 38 auf, dessen eine Flanke 41 im Winkel, im vorliegenden Fall im stumpfen Winkel, an die Gleitfläche 16a anschließt und ebenfalls eben ausgebildet ist. Die andere Flanke 42 des Führungssteges 38 liegt entsprechend entgegengesetzt geneigt und schließt unmittelbar an die radial innere, dem Schneidkörper 13a zugehörige Seitenfläche des Schneideinsatzes 5a an. Die, die beiden Stegflanken 41, 42 verbindende Stegkante 43 ist eben.

Jeder Führungssteg 38 hat eine Breite, die der Hälfte der Breite einer Führungsnut 37 in der zugehörigen, ansonsten im wesentlichen durchgehend ebenen Stirnfläche des Tragkörpers 2a entspricht, so daß, wenn beide Führungsstege 38 in die Führungsnut 37 eingesetzt sind, deren voneinander abgekehrte Stegflanken 41 an den entsprechend geneigten Nutflanken 40 anliegen. Die einander zugekehrten Stegflanken 42 divergieren berührungsfrei und in einer gemeinsamen Ebene liegenden Stegkanten 43 liegen in geringem Abstand vom Nutboden 39 der Führungsnut 37. Die Gleitflächen können auch wenigstens teilweise verzahnt ineinandergreifen.

Die Führungsnut 37, die symmetrisch zu einer Axialebene des Tragkörpers 2a ausgebildet ist und eine gegenüber ihrer Nuttiefe annähernd doppelt so große mittlere Nutbreite hat, erstreckt sich aufgrund der Z-Form der von ihr durchsetzten, die Gleitflächen 15a bildenden Stirnfläche des Tragkörpers 2a an jedem Ende unterschiedlich weit in ihrer Längsrichtung, derart, daß an jedem Nutende eine Nutflanke 40 bis zum Außenumfang des Tragkörpers 2a reicht, während die andere Flanke 40 an diesem Nutende demgegenüber zurückversetzt ist, jedoch am anderen Nutende bis zum genannten Außenumfang reicht. Jede Flanke 40 reicht mit demjenigen Ende bis zum Außenumfang, über welches auch der zugehörige Schneideinsatz 5a mit seinem Schneidkörper 13a vorsteht.

Wie insbesondere Fig. 8 zeigt, geht jeder Schneidkopf 12a über eine schräge Flanke in den zugehörigen Schaft 11a über, derart, daß die Schneiden bei radial am weitesten innen liegender Einstellung verhältnismäßig weit außerhalb der Hüllfläche des Tragkörpers 2a etwa in einem Radialabstand zur Bohrachse 4a liegen, der dem Radialabstand der Schneiden der Ausführungsform nach den Figuren 1 bis 7 dann entspricht, wenn diese radial am weitesten nach außen eingestellt sind. Dadurch können mit den Schneideinsätzen 5a nach den Figuren 8 bis 11 Bohrungen hergestellt werden, die gleich groß oder größer als die größten Bohrungen sind, die mit den Schneideinsätzen nach den Figuren 1 bis 5 hergestellt werden können. Die Paßbohrungen 23a reichen bei der Ausführungsform nach den Figuren 8 bis 15 bis an die Gleitflächen 15a. An der von diesen Gleitflächen 15a abgekehrten Stirnseite ist der Tragkörper 2a mit Radialnuten für die Aufnahme von Nutensteinen der Maschinenspindel versehen.

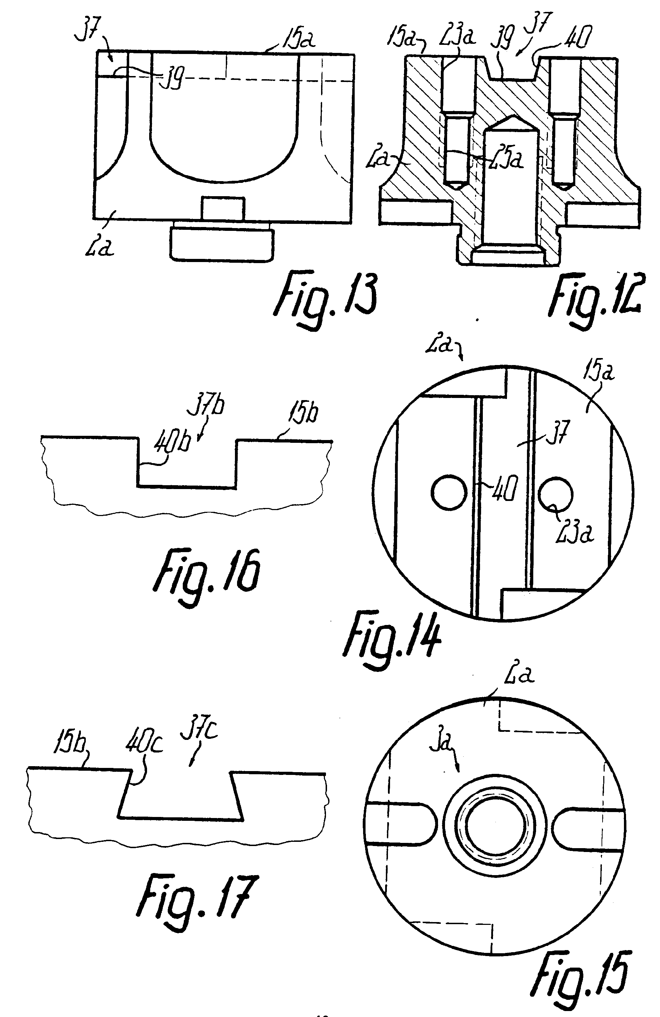

Wie Fig. 16 zeigt, kann die Führungsnut 37b im Querschnitt auch rechtwinklig bzw. mit parallelen Nutflanken 40b ausgebildet sein, die dann zweckmäßig rechtwinklig an die Gleitflächen 15b anschließen. Bei der Ausführungsform nach Fig. 17 ist die Führungsnut 37c im Querschnitt hinterschnitten als Schwalben-Schwanz-Nut ausgebildet, so daß die Nutflanken 40c im Querschnitt spitzwinklig an die Gleitflächen 15b anschließen. Nutführungen, wie sie anhand der Fig. 8 bis 15 beschrieben sind, können auch bei der Ausführungsform nach den Fig. 1 bis 7 vorgesehen sein.

**Patentansprüche**

1. Bohrkopf mit einem Tragkörper (2), an dem mindestens ein Schneideinsatz (5) gegenüber einer Bohrachse (4) mit mindestens einem Stellglied (10) entlang einer Führung (6) in einer Stellrichtung (Pfeil 9) verstellbar gelagert ist, wobei das wenigstens eine Spannglied (7) über eine Spannpratze (8) an dem mindestens einen Schneideinsatz (5) angreift, dadurch gekennzeichnet, daß die Spannpratze (8) mittels Paßbohrungen (23, 24) am Tragkörper (2) und an der Spannpratze (8) und einem damit zusammenwirkenden Paßschaft (27) am Spannglied (7) im wesentlichen spielfrei gegenüber der Bohrungsachse (4) lagebestimmt ausgerichtet ist und die Spannpratze (8) wenigstens eine in einer quer zur Stellrichtung (9) verlaufenden Ebene liegende Meßbezugsfläche (34) aufweist.

2. Bohrkopf nach Anspruch 1, dadurch gekennzeichnet, daß das wenigstens eine Stellglied (10) an einem Schneideinsatz (5) gelagert und an einer gegenüber dem Tragkörper (2) im wesentlichen feststehenden Gegenfläche abgestützt ist, wobei die Gegenfläche als eine gegenüber der Bohrachse (4) lagebestimmte Bezugsfläche (19) ausgebildet und wenigstens in Stellrichtung (Pfeil 9) gegenüber dem Tragkörper (2) im wesentlichen spielfrei angeordnet ist.

3. Bohrkopf nach Anspruch 1 oder 2, dadurch gekennzeichnet, daß wenigstens ein Schneideinsatz (5) im eingestellten Zurstand mit einem Spannglied (7) gegen die Führung (6) verspannbar ist und daß mindestens ein Stellglied (10) und wenigstens ein Spannglied (7) im wesentlichen in einer gemeinsamen, insbesondere zur Verstellrichtung (Pfeil 9) des Schneideinsatzes (5) bzw. zur Bohrachse (4) parallelen Ebene liegen und vorzugsweise das Stellglied (10) etwa in der Mitte der Breite des Schneideinsatzes (5) vorgesehen ist.

4. Bohrkopf nach einem der Ansprüche 1 bis 3, dadurch gekennzeichnet, daß mindestens ein Stellglied (10) im wesentlichen in jeder Stellung annähernd über seine gesamte Länge wenigstens auf einem Teil seines Umfanges verdeckt liegt, insbesondere wenigstens vom Schneideinsatz (5) ummantelt ist und daß vorzugsweise das Stellglied (10) einen baulich mit dem Schneideinsatz (5) verbundenen und insbesondere in voreingestelltem Zustand mit diesem montierbaren Bauteil bildet.

5. Bohrkopf nach einem der vorhergehenden Ansprüche, dadurch gekennzeichnet, daß mindestens ein Stellglied (10) von einer Außenseite, insbesondere vom äußeren Ende des Schneideinsatzes (5) her bzw. durch eine es aufnehmende Bohrung hindurch zugänglich ist.

6. Bohrkopf nach einem der vorhergehenden Ansprüche, dadurch gekennzeichnet, daß eine als Gegenfläche für ein Stellglied vorgesehene Bezugsfläche (19) an einem Spannglied (7) vorgesehen, insbesondere durch eine Passungs-Umfangsfläche des gegenüber dem Tragkörper (2) im wesentlichen spielfrei geführten Spanngliedes (7) gebildet ist, wobei vorzugsweise das Spannglied (7) eine Spannschraube, insbesondere mit einem zwischen einem Schraubenkopf (26) und einem Gewindeende (28) liegenden, feintolerierten Paßschaft (27) ist, der in eine Paßbohrung (23) des Tragkörpers (2) eingreift.

7. Bohrkopf nach einem der vorhergehenden Ansprüche, dadurch gekennzeichnet, daß mindestens ein Stellglied (10) eine in einer Gewindebohrung (20) des Schneideinsatzes (5) geführte Stellgewindespindel aufweist und in Axialansicht auf den Bohrkopf (1) etwa in der Mitte der Breite einer Führung (6) für den zugehörigen Schneideinsatz (5) liegt.

8. Bohrkopf nach einem der vorhergehenden Ansprüche, dadurch gekennzeichnet, daß der Schneideinsatz (5) einen Schaft (11) mit einem Langloch (17) für den Durchgriff eines Spanngliedes (7) aufweist und daß vorzugsweise das Stellglied (10) von einem Ende her in das gegenüber dem Spannglied (7) seitliches Spiel aufweisende Langloch (17) ragt, insbesondere derart, daß sich Drehachsen des Spanngliedes (7) und des Stellgliedes (10) rechtwinklig schneiden.

9. Bohrkopf nach einem der vorhergehenden Ansprüche, dadurch gekennzeichnet, daß die Spannpratze (8) insbesondere das jeweilige Spannglied (7) im wesentlichen vollständig versenkt aufnimmt und für zwei Schneideinsätze (5) gemeinsam vorgesehen ist.

10. Bohrkopf nach einem der vorhergehenden Ansprüche, dadurch gekennzeichnet daß die Meßbezugsfläche (34) in einer zur Schneidenbrustfläche des Schneideinsatzes (5) etwa rechtwinkligen Axialebene (31) der Bohrachse (4) liegt.

11. Bohrkopf nach Anspruch 9, dadurch gekennzeichnet, daß die Meßbezugsfläche (34), insbesondere zwei entgegengesetzt weisende und in einer gemeinsamen Ebene liegende Meßbezugsflächen (34), an einer zur Spannung der Schneideinsätze (5) gegen den Tragkörper (2) vorgesehenen Spannpratze (8) vorgesehen sind und vorzugsweise zwischen zwei die Spannpratze (8) durchsetzenden Spanngliedern (7) liegen.

12. Bohrkopf nach einem der vorhergehenden Ansprüche, dadurch gekennzeichnet, daß mindestens eine Führung (6) wenigstens teilweise durch eine profilierte, insbesondere in Axialansicht auf den Tragkörper (2) Z-förmige, Stirnfläche (14) des Tragkörpers (2) gebildet ist, in die der jeweilige Schneideinsatz (5) mit einer Gegenfläche (16) eingreift.

13. Bohrkopf nach einem der vorhergehenden Ansprüche, dadurch gekennzeichnet, daß eine Führung (6a) mindenstens eine Nutführung mit wenigstens einem in eine Führungsnut (37) eingreifenden Führungssteg (38) aufweist, wobei vorzugsweise am Schneideinsatz (5a) ein über einen Schaft (11a) im wesentlichen durchgehender Führungssteg (38) vorgesehen ist, der nach Art einer Nut- und Federführung (36) in eine mit einem Ende der jeweiligen Nutflanke (40) gegenüber dem Außenumfang des Tragkörpers (2a) zurückversetzte Führungsnut (37) eingreift und daß insbesondere der Führungssteg (38) nur mit einer Stegflanke (41) an einer geneigten Nutflanke (40) der Führungsnut (37) anliegt.

14. Bohrkopf nach einem der vorhergehenden Ansprüche, dadurch gekennzeichnet, daß zwei Schneideinsätze (5a) mit gesonderten Führungsstegen (38) in eine einzige gemeinsame, im wesentlichen in einer Axialebene des Tragkörpers (2a) liegende Führungsnut (37) eingreifen und/oder mit einander zugekehrten Seiten unmittelbar aneinander abgestützt sind.

15. Bohrkopf nach Anspruch 12 oder 13, dadurch gekennzeichnet, daß eine Nutführung, insbesondere der Führungssteg (38), unmittelbar an die der Schneidenbrustfläche zugehörige Außenseite des Schneideinsatzes (5a) anschließt und daß vorzugsweise die der Führung (6a) zugehörige Seite des Schneideinsatzes (5a) benachbart zur Nutführung durchgehend im wesentlichen als ebene Gleitfäche (16a) ausgebildet ist.

16. Bohrkopf nach einem der vorhergehenden Ansprüche, dadurch gekennzeichnet, daß eine Führung (6), in Verstellrichtung (Pfeil 9) gesehen, geneigt zur Bohrachse (4) liegt, wobei vorzugsweise zwei beiderseits der Bohrachse (4) einander gegenüberliegende Einzel-Führungen eine stumpfwinklige Stirnfläche (14) des Tragkörpers (2) bilden.

## Claims

1. Boring head with a support body (2), on which is adjustably mounted at least one cutting attachment (5) with respect to a boring axis (4) with at least one regulating member (10) along a guide (6) in an adjusting direction (arrow 9), the at least one locking member (7) engaging by means of a workholding strap (8) on at least one cutting attachment (5), characterized in that the workholding strap (8) by means of fitting bores (23,24) on the support body (2) and on the workholding strap (8) and a fitting shaft (27) on the locking member (7) cooperating therewith is oriented in positionally determined clearance-free manner with respect to the boring axis (4) and the workholding strap (8) has at least one measuring reference surface (34) located in a plane at right angles to the regulating direction (9).

2. Boring head according to claim 1, characterized in that the at least one regulating member (10) is mounted on a cutting attachment (5) and is supported on a mating surface substantially fired with respect to the support body (2), the mating surface being constructed as a reference surface (19) positionally determined relative to the boring axis (4) and is arranged in substantially clearance-free manner with respect to the support body (2) in the regulating direction (arrow 9).

3. Boring head according to claims 1 or 2, characterized in that at least one cutting attachment (5) in the set state can be braced with a locking member (7) against the guide (6) and that at least one regulating member (10) and at least one locking member (7) are located substantially in a common plane parallel to the adjusting direction (arrow 9) of the cutting attachment (5) or the boring axis (4) and preferably the regulating member (10) is located roughly in the centre of the width of the cutting attachment (5).

4. Boring head according to one of the claims 1 to 3, characterized in that at least one regulating member (10) substantially in any position approximately over its entire length is concealed over at least part of its circumference and in particular is enveloped by the cutting attachment (5) and that preferably the regulating member (10) forms a component constructionally connected to the cutting attachment (5) and which is in particular fittable in a preset state therewith.

5. Boring head according to one of the preceding claims, characterized in that at least one regulating member (10) is accessible from an outside, particularly from the outer end of the cutting attachment (5) or through a bore receiving the same.

6. Boring head according to one of the preceding claims, characterized in that a reference surface (19) serving as a mating surface for a regulating member is provided on a locking member (7) and is in particular formed by a fitting circumferential surface of the locking member (7) guided in substantially clearance-free manner relative to the support body (2) and preferably the locking member (7) is a setscrew, particularly having a finely toleranced fitting shaft (27) located between a screw head (26) and a threaded end (28) and which engages in a fitting bore (23) of the support body (2).

7. Boring head according to one of the preceding claims, characterized in that at least one regulating member (10) has a threaded regulating spindle guided in a taphole (20) of the cutting attachment (5) and in an axial view of the boring head (1) is located roughly in the centre of the width of a guide (6) for the associated cutting attachment (5).

8. Boring head according to one of the preceding claims, characterized in that the cutting attachment (5) has a shaft (11) with an elongated hole (17) for the passage of a locking member (7) and that preferably the regulating member (10) projects from one end into the elongated hole (17) having a lateral clearance with respect to the locking member (7) and in particular in such a way that the rotation axes of the locking member (7) and the regulating member (10) intersect at right angles.

9. Boring head according to one of the preceding claims, characterized in that the workholding strap (8) receives in a substantially completely countersunk form the particular locking member (7) and is jointly provided for two cutting attachments (5).

10. Boring head according to one of the preceding claims, characterized in that the measuring reference surface (34) is located in an axial plane (31) of the boring axis (4) roughly at right angles to the cutter front face of the cutting attachment (5).

11. Boring head according to claim 9, characterized in that the measuring reference surface (34) and in particular two oppositely directed measuring reference surfaces (34) located in a common plane are provided on a workholding strap (8) provided for tensioning the cutting attachments (5) against the support body (2) and are preferably located between two locking members (7) traversing the workholding strap (8).

12. Boring head according to one of the preceding claims, characterized in that at least one guide (6) is at least partly formed by a profiled face (14) of the support body (2), which is in particular Z-shaped in axial view on the support body (2) and in it engages the particular cutting attachment (5) with a mating surface (16).

13. Boring head according to one of the preceding claims, characterized in that a guide (6a) has at least one guide groove with at least one guide web (38) engaging in a guide groove (37) and preferably on the cutting attachment (5a) is provided a guide web (38) passing through via a shaft (11a) and which engages in the manner of a groove and tongue guide (36) in a guide groove (37) set back with respect to the outer circumference of the support body (2a) facing with one end the particular groove flank (40) and that in particular the guide web (38) only engages with one web flank (41) on an inclined groove flank (40) of the guide groove (37).

14. Boring head according to one of the preceding claims, characterized in that two cutting attachments (5a) with separate guide webs (38) engage in a single, common guide groove (37) substantially located in an axial plane of the support body (2a) and/or with facing sides are directly supported on one another.

15. Boring head according to claims 12 or 13, characterized in that a guide groove, particularly the guide web (38), is connected directly to the outside of the cutting attachment (5a) associated with the cutter front face and that preferably the side of the cutting attachment (5a) associated with the guide (6a) is constructed as a substantially planar sliding face (16a) adjacent to the guide groove.

16. Boring head according to one of the preceding claims, characterized in that, considered in the adjustment direction (arrow 9), one guide (6) is inclined to the boring axis (4) and preferably two facing individual guides on either side of the boring axis (4) form an obtuse-angled face (14) of the support body (2).

**Revendications**

1. Tête d'alésage comprenant un corps porteur (2) sur lequel au moins un outil de coupe rapporté (5) est monté en pouvant être déplacé par rapport à un axe d'alésage (4), dans une direction de réglage (flèche 9) et le long d'un guidage (6), au moyen d'au moins un organe de réglage (10), cependant qu'au moins un organe de serrage (7) vient en prise avec au moins un outil de coupe rapporté (5) par l'intermédiaire d'une patte de serrage (8), caractérisée par le fait que la patte de serrage (8) est orientée sans jeu dans une position déterminée par rapport à l'axe d'alésage (4) au moyen de perçages calibrés (23, 24) sur le corps porteur (2) et sur la patte de serrage (8) et d'une tige calibrée (27) coopérant avec eux sur l'organe de serrage (7), et que la patte de serrage (8) comporte au moins une surface de mesure de référence (34) située dans un plan qui s'étend transversalement par rapport à la direction de réglage (9).

2. Tête d'alésage selon la revendication 1, caractérisée par le fait qu'au moins un organe de réglage (10) est monté sur un outil de coupe rapporté (5), et qu'il est appuyé sur une surface conjuguée qui est fixe, pour l'essentiel, par rapport au corps porteur (2), cependant que la surface conjuguée est réalisée sous la forme d'une surface de référence (19) dont la position par rapport à l'axe d'alésage (4) est déterminée, et qu'elle est disposée sans jeu pour l'essentiel par rapport au corps porteur (2), du moins dans la direction de réglage (flèche 9).

3. Tête d'alésage selon la revendication 1 ou 2, caractérisée par le fait qu'au moins un outil de coupe rapporté (5) peut être serré contre le guidage (6) au moyen d'un organe de serrage (7) dans l'état où il est réglé, et par le fait qu'au moins un organe de réglage (10) et au moins un organe de serrage (7) sont situés, pour l'essentiel, dans un plan commun qui est en particulier parallèle à la direction de déplacement (flèche 9) de l'outil de coupe rapporté (5) ou à l'axe d'alésage (4), respectivement, et que, de préférence, l'organe de réglage (10) est prévu à peu près au milieu de la largeur de l'outil de coupe rapporté (5).

4. Tête d'alésage selon l'une des revendications 1 à 3, caractérisée par le fait que dans chaque position, pour l'essentiel, au moins un -organe de réglage (10) est caché approximativement sur la totalité de sa longueur et du moins sur une partie de son pourtour, en particulier en étant du moins enveloppé par l'outil de coupe rapporté (5), et par le fait que, de préférence, l'organe de réglage (10) constitue un élément de construction qui est relié par construction à l'outil de coupe rapporté (5) et qui peut être monté en particulier avec celui-ci dans un état de préréglage.

5. Tête d'alésage selon l'une des revendications précédentes, caractérisée par le fait qu'au moins un organe de réglage (10) est accessible depuis un côté extérieur, et en particulier depuis l'extrémité extérieure de l'outil de coupe rapporté (5) ou, respectivement, à travers un perçage qui le reçoit.

6. Tête d'alésage selon l'une des revendications précédentes, caractérisée par le fait qu'il est prévu sur un organe de serrage (7) une surface de référence (19) qui est réalisée sous la forme d'une surface conjuguée destinée à un organe de serrage, et qu'elle est en particulier constituée par une surface périphérique calibrée de l'organe de serrage (7) qui est guidé par rapport au corps porteur (2), sans jeu pour l'essentiel, l'organe de serrage (7) étant de préférence une vis de serrage comportant en particulier une tige calibrée (27) à tolérances serrées qui est située entre une tête de vis (26) et une extrémité filetée (28) et, qui est en prise dans un perçage calibré (23) du corps porteur (2).

11

7. Tête d'alésage selon l'une des revendications précédentes, caractérisée par le fait qu'au moins un organe de réglage (10) comporte une broche filetée de réglage qui est guidée dans un perçage fileté (20) de l'outil de coupe rapporté (5), et qu'en vue en élévation axiale sur la tête d'alésage (1), elle est située à peu près au milieu de la largeur d'un guidage (6) destiné à l'outil de coupe rapporté correspondant (5).

8. Tête d'alésage selon l'une des revendications précédentes, caractérisée par le fait que l'outil de coupe rapporté (5) comporte une queue (11) pourvue d'un trou allongé (17) destiné au passage d'un organe de serrage (7), et par le fait que, de préférence, l'organe de réglage (10) fait saillie depuis une extrémité dans le trou allongé (17) qui présente un jeu latéral par rapport à l'organe de serrage (7), et ce, en particulier, d'une manière telle que les axes de rotation de l'organe de serrage (7) et de l'organe de réglage (10) se coupent à angle droit.

9. Tête d'alésage selon l'une des revendications précédentes, caractérisée par le fait que la patte de serrage (8) reçoit en particulier l'organe de serrage correspondant (7) d'une manière telle qu'il soit complètement noyé, pour l'essentiel, et qu'elle est prévue en commun pour deux outils de coupe rapportés (5).

10. Tête d'alésage selon l'une des revendications précédentes, caractérisée par le fait que la surface de mesure de référence (34) est située dans un plan axial (31) de l'axe d'alésage (4) qui est à peu près à angle droit par rapport à la surface de coupe de l'outil de coupe rapporté (5).

11. Tête d'alésage selon la revendication 9, caractérisée par le fait que la surface de mesure de référence (34), et en particulier deux surfaces de mesure de référence (34) dirigées en sens inverse et situées dans un plan commun, sont prévues sur une patte de serrage (8) qui est réalisée en vue du serrage des outils de coupe rapportés (5) contre le corps porteur (2), et que, de préférence, elles sont situées entre deux organes de serrage (7) qui traversent la patte de serrage (8).

12. Tête d'alésage selon l'une des revendications précédentes, caractérisée par le fait qu'au moins un guidage (6) est constitué, du moins partiellement, par une surface frontale profilée (14) du corps porteur (2) qui présente en particulier la forme d'un Z en vue en élévation axiale sur le corps porteur (2) et avec laquelle l'outil de coupe rapporté correspondant (5) vient en prise par une surface conjuguée (16).

13. Tête d'alésage selon l'une des revendications précédentes, caractérisée par le fait qu'un guidage (6a) comporte au moins un guidage par rainure qui comprend au moins une nervure de guidage (38) pénétrant dans une rainure de guidage (37), cependant qu'il est prévu de préférence sur l'outil de coupe rapporté (5a) une nervure de guidage (38) qui est continue, pour l'essentiel, sur toute la longueur d'une queue (11a) et qui pénètre à la manière d'un guidage par mortaise et languette (36) dans une rainure de guidage (37) en retrait par rapport au pourtour extérieur du corps porteur (2a) par une extrémité du flanc correspondant (40) de la rainure, et par le fait qu'en particulier, la nervure de guidage (38) ne porte que par un flanc de nervure (41) sur un flanc de rainure incliné (40) de la rainure de guidage (37).

14. Tête d'alésage selon l'une des revendications précédentes, caractérisée par le fait que deux outils de coupe rapportés (5a) pourvus de nervures de guidage séparées (38) pénètrent dans une seule rainure de guidage commune (37) située pour l'essentiel dans un plan axial du corps porteur (2a) et/ou qu'ils sont appuyés directement l'un contre l'autre par des côtés tournés l'un vers l'autre.

15. Tête d'alésage selon la revendication 12 ou 13, caractérisée par le fait qu'un guidage à rainure, et en particulier la nervure de guidage (38), se raccorde directement au côté extérieur de l'outil de coupe rapporté (5a) qui est associé à la surface de coupe, et par le fait que, de préférence, le côté de l'outil de coupe rapporté (5a) qui est associé au guidage (6a) est réalisé continûment au voisinage du guidage par rainure, pour l'essentiel sous la forme d'une surface de glissement plane (16a).

16. Tête d'alésage selon l'une des revendications précédentes, caractérisée par le fait qu'un guidage (6) est situé d'une manière inclinée par rapport à l'axe d'alésage (4), lorsqu'il est vu dans la direction de déplacement (flèche 9), cependant que deux guidages individuels qui se font face mutuellement des deux côtés de l'axe d'alésage (4) forment de préférence une surface frontale à angle obtus (14) du corps porteur (2).

Fig.3

Fig.1

Fig.4

Fig.2

Fig. 6

Fig. 5

Fig. 7

14

Fig.8

Fig.10

Fig.11

Fig.9

Fig. 13

Fig. 12

Fig. 16

Fig. 14

Fig. 17

Fig. 15